# EUROPEAN PATENT APPLICATION

(11) **EP 1 767 287 A1**
(43) Date of publication of application: **28.03.2007**
(21) Application number: 06120949.0
(22) Date of filing: 20.09.2006
(51) Int. Cl.: B21K 1/56, B21D 17/02, F16B 37/02, F16B 37/04, B21D 53/24

(54) **T-nut**

(30) Priority: 21.09.2005 JP 2005273933
(71) Applicant: Nagayama Electric Co., Ltd., Kishiwada-shi Osaka 596-0823 (JP)
(72) Inventor: Nagayma, Yutaka, Kishiwada-shi Osaka 596-0823 (JP)
(74) Representative: Gritschneder, Martin

(57) **Abstract**

There is provided a T-nut (1) having a tubular shank (3) having a cylindrical shape, having a first end and a second end, an inside surface and an outside surface, the tubular shank (3) being made of a thin metal plate pressed to form a female thread (6) on the inside surface, the outside surface having a pattern corresponding to the female thread; and a flange portion (5) formed to the first end of the tubular shank (3).

## Description

### Field of Technology

The present invention relates to a T-nut useful for joining materials, and in particular, relates to a T-nut for joining a table plate material to leg materials by using bolts and screws.

### Background of Technology

Conventional T-nuts, invented by the same inventor of the present invention, are described hereinafter.

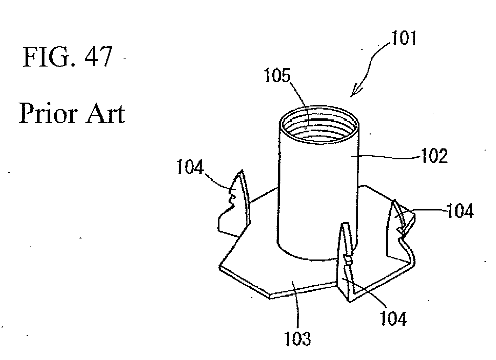

A conventional T-nut 101, shown in Fig. 47, is formed by applying a reduction process to a metal plate to form a tubular shank 102 having a predetermined diameter and length, and to form a flange portion 103 integrally formed with the shank 102. The flange portion 103 extends outside from one end of the shank 102. Further, on the internal surface of the shank 102, a female screw 105 is formed by means of a screwing process. The conventional T-nut is disclosed in Japanese laid-open patent publication No. 2002-295434.

However, in the case of the conventional T-nut 101, the female screw 105 is formed by a screwing process applied to the cylindrically formed shank 102, so that the material should be enough thick (e.g., 1.2mm to 1.0mm, approximately) such that the wall is not broken at the time of the screw process. Thus, the metal plate should have been enough thick, which increases the cost.

Also, the female screw 105 of the shank 102 is formed by means of a screw process, which produces large amounts of scrapes. It was necessary to spend labor and cost for dealing with the scrapes

The present invention is accomplished in view of the above. The objective of the present invention is to form a tubular shank formed from a thinner metal plate or tube. Another objective is to avoid the wall of the shank from being broken while processing. Yet another objective is to significantly decrease the amount of the metal plate for producing T-nuts.

In order to accomplish the objectives of the present invention, the following structures are provided. In the first aspect of the present invention, there is provided a T-nut, wherein a tubular shank is a different body from a flange portion. The tubular shank has a thickness equal to or larger than that of the flange portion. The thin metal plate having the thickness is subjected to press processing to form an internal convexoconcave groove in the form of a female screw at a predetermined portion on one surface thereof, as well as to form an external convexoconcave groove corresponding to the internal convexoconcave groove in the form of the female screw. The thin metal plate is rolled into a cylindrical shape such that the one surface where the internal convexoconcave groove in the form of the female screw is formed is located inside. The opposing side ends are joined together. The flange portion is joined to one end of the cylindrical tubular shank, which is a different body from the shank.

In the second aspect of the present invention, there is provided a T-nut, wherein a tubular shank is integrally formed with a flange portion. A thin metal plate having a predetermined thickness is subjected to press processing to form an internal convexoconcave groove in the form of a female screw at a predetermined portion on one surface thereof, as well as to form an external convexoconcave groove corresponding to the internal convexoconcave groove in the form of the female screw. The thin metal plate is rolled into a cylindrical shape such that the one surface where the internal convexoconcave groove in the form of the female screw is formed is located inside, and such that a flange portion is formed to protrude outside from one end of the cylindrical tubular shank. The opposing side ends are joined, so as to form the shank integrally formed with the flange portion.

In the third aspect of the present invention, there is provided a T-nut, wherein a tubular shank is integrally formed with a flange portion. The shank is formed cylindrically by means of reduction processing of a thin metal plate having a predetermined thickness. The flange portion is formed to protrude outside from one end of the shank. A press processing is applied to form an internal convexoconcave groove in the form of a female screw at an internal suface of the shank, and to form an external convexoconcave groove corresponding to the internal convexoconcave groove in the form of the female screw at an external surface of the shank.

In the fourth aspect of the present invention, there is provided a T-nut, wherein a tubular shank is a different body from a flange portion. The tubular shank has a thickness equal to or larger than that of the flange portion. The shank is formed to be cylindrical by means of reduction processing of a thin metal plate having a predetermined thickness, or is a thin metal tube having a predetermined thickness. The thin metal plate or the thin metal tube is subjected to a press process to form an internal convexoconcave groove in the form of a female screw at a predetermined portion on one surface thereof, as well as to form an external convexoconcave groove corresponding to the internal convexoconcave groove in the form of the female screw. The flange portion is joined to one end of the cylindrical tubular shank, which is a different body from the shank.

In the fifth aspect of the present invention, there is provided a T-nut according to the first or second aspect of the present invention. The thin metal plate having the predetermined thickness is composed of several sheets of thin metal plate parts such that the several sheets of the thin metal plate parts are formed into one shank.

In the sixth aspect of the present invention, there is provided a T-nut according to any one of the first, second or fifth aspect of the present invention. The opposing ends where to be joined after being rolled cylindrically are formed to be linear.

In the seventh aspect of the present invention, there is provided a T-nut according to any one of the first, second or fifth aspect of the present invention. The ends where to be joined after being rolled cylindrically are formed into a continuous or discontinuous convexo-concave shape or a continuous or discontinuous waved shape, such that each of the ends is engaged with each other.

In the eighth aspect of the present invention, there is provided a T-nut according to any one of the first to seventh aspects of the present invention. The shank is provided with a to-be-caulked portion which is extended from a tip portion of a portion where the internal convexoconcave groove in the form of the female screw is formed. Alternatively, the shank is provided with a to-be-caulked portion which is extended from a tip portion of a portion where the internal convexoconcave groove in the form of the female screw is formed. The shank is provided with a line at the border between the portion where the internal convexoconcave groove in the form of the female screw is formed and to-be-caulked portion.

In the ninth aspect of the present invention, there is provided a T-nut according to any one of the first to seventh aspects of the present invention. The shank comprises a step portion provided on a midway in the axial direction thereof, a cylinder portion extending between the tip portion and the step portion, and an enlarged cylinder portion provided at the side of the base portion extended between the step portion and the flange portion where the enlarged cylinder portion has an inner diameter and an outer diameter larger than those of the cylinder portion. The cylinder portion has on the inner surface the internal convexoconcave groove of the female screw. The cylinder portion also has on the outer surface of the cylinder portion an external convexoconcave groove corresponding to the internal convexoconcave groove of the female screw.

In the tenth aspect of the present invention, there is provided a T-nut according to any one of the first to seventh aspects of the present invention. The shank comprises a step portion provided on a midway in the axial direction thereof, a cylinder portion extending between the tip portion and the step portion, and an enlarged cylinder portion provided at the side of the base portion extended between the step portion and the flange portion where the enlarged cylinder portion has an inner diameter and an outer diameter larger than those of the cylinder portion. The cylinder portion has a to-be-caulked portion extending for a predetermined length from the tip portion. The internal convexoconcave groove of the female screw is formed on the inside of the shank except for the to-be-caulked portion. On the outer surface of the cylinder portion, the external convexoconcave groove corresponding to the internal convexoconcave groove of the female screw is formed.

In the eleventh aspect of the present invention, there is provided a T-nut according to any one of the first to seventh aspects of the present invention. The T-nut is capable to form another female screw for being engaged with a screw or bolt which is different in pitch from that for the female screw of the internal convexoconcave groove.

In the twelfth aspect of the present invention, there is provided a T-nut according to any one of the first to eleventh aspects of the present invention. At least one concave portion is formed on the inner surface of the shank, by giving an external force from a portion where the internal convexoconcave groove of the female screw is formed. The forming of the concave portion makes the screw pattern of the internal convexoconcave groove of the female screw an irregular structure such that a bolt or screw is impossible to be released after being engaged.

In the thirteenth aspect of the present invention, there is provided a T-nut according to any one of the first to twelfth aspects of the present invention. On the peripheral portion of the flange portion, claws are formed such that they are directed from one end of the shank to the tip thereof. Each of the claws is formed into a straight, hook or notched shape.

In the fourteenth aspect of the present invention, there is provided a T-nut according to any one of the first to twelfth aspects of the present invention, wherein on the peripheral portion of the flange portion, two couples of claws are formed such that they are directed from one end of the shank to the tip thereof, wherein each of the claws is formed into a straight, hook or notched shape.

In the fifteenth aspect of the present invention, there is provided a T-nut according to the fourteenth aspect of the present invention. The claws in the relationship of each of the two couples are opposing, parallel or generally parallel to each other with respect to the axial direction of the flange portion.

In the sixteen aspect of the present invention, there is provided a T-nut according to the fourteenth or fifteenth aspect of the present invention. A protruded portion is formed on the peripheral portion of the flange. Between the couple of the claws, the protruded portion is directed from one end of the shank to the tip portion flange portion.

In the seventeenth aspect of the present invention, there is provided a T-nut according to any one of the first to sixteenth aspects of the present invention. The flange portion is formed to be octagonal, generally octagonal, round or both-end-arc-rectangular shape.

### Brief Description of the Drawings

Fig. 1(a) shows a perspective view of the T-nut of the present invention, and Fig. 1(b) shows a decomposed perspective view.
Fig. 2 shows a longitudinal cross sectional view of Fig. 1(a).
Fig. 3 shows a plane view of the thin metal plate for forming the T-nut of the first embodiment.
Fig. 4 shows a simplified illustration drawing in which the internal convexoconcave groove is formed on the thin metal plate for forming the T-nut of the first embodiment.
Fig. 5 shows an enlarged longitudinal cross sectional view of Fig. 4.
Fig. 6 shows a perspective view of the shank of the T-nut of the first embodiment.
Fig. 7(a) shows a perspective view of the T-nut as the second embodiment and Fig. 7(b) shows a decomposed perspective view.
Fig. 8 shows a longitudinal cross sectional view of Fig. 7(a).
Fig. 9 shows a perspective view of the T-nut as the third embodiment.
Fig. 10 shows a perspective view of the T-nut as the fourth embodiment.
Fig. 11 shows an explanation drawing where the T-nut of the shank as the fourth embodiment is formed by several sheets of metal plate parts.
Fig. 12 shows an explanation drawing in which the T-nut of the shank as the fourth embodiment has a shank 3 in which joint ends of the metal plate are linear.
Fig. 13 shows an explanation drawing in which the T-nut of the shank as the fourth embodiment has a shank 3 in which joint ends of the metal plate are continuous or discontinuous.
Fig. 14 shows an explanation drawing in which the T-nut of the shank as the fourth embodiment has a shank 3 in which joint ends of the metal plate are waved.
Fig. 15 shows a perspective view of the T-nut as the fifth embodiment.
Fig. 16 shows a longitudinal cross sectional view of Fig. 15.
Fig. 17 shows a perspective view of the T-nut as the sixth embodiment.
Fig. 18 shows a perspective view of the cross section of Fig. 17.
Fig. 19 shows an explanation drawing showing an enlarged cross section of Fig. 17.
Fig. 20 shows a perspective view of the T-nut as the seventh embodiment.
Fig. 21 shows a perspective view of the cross section of Fig. 20.
Fig. 22(a) shows a perspective view of the T-nut as the eighth embodiment and Fig. 22(b) shows a decomposed perspective view.
Fig. 23(a) shows a perspective view of the T-nut as the ninth embodiment, and Fig. 23(b) shows a decomposed perspective view.
Fig. 24(a) shows a perspective view of the metal tube for forming the shank of the T-nut as the tenth embodiment, Fig. 24 (b) shows a perspective view in which the internal convexoconcave groove and the external convexoconcave groove are formed on the metal tube, Fig. 24(c) shows a perspective view in which the metal tube is cut for a predetermined length, and Fig. 24(d) shows a perspective view of a T-nut in which the metal tube is provided with a shank.
Fig. 25 shows an explanation drawing of the T-nut as the eleventh embodiment.
Fig. 26 shows a bottom view of Fig. 25.
Figs. 27(a)(b) show an explanation drawing of the T-nut as the twelfth eleventh embodiment.
Fig. 28 shows an explanation drawing of the cross section when the inner surface of the internal convexoconcave groove is applied to a screw process for forming a female screw.
Fig. 29 shows an explanation drawing of the cross section showing that a female screw is formed on the inner surface of the internal convexoconcave groove of the shank.
Fig. 30 shows an explanation drawing showing that the shank integrally formed with the flange portion is applied to an external force to make a part of the internal convexoconcave groove irregular.
Fig. 31 shows an explanation drawing showing that the shank separately formed from the flange portion is applied to an external force to make a part of the internal convexoconcave groove irregular.
Fig. 32 shows an explanation drawing of the claw of the notches.
Fig. 33 shows an explanation drawing of the claw of the hook.
Fig. 34 shows an explanation drawing of the straight claw.
Fig. 35 shows a perspective view of the other claws for the T-nut of the present invention.
Fig. 36 shows a perspective view of the other claws for the T-nut of the present invention.
Fig. 37 shows a perspective view of the T-nut in which the periphery between the claws on the flange portion is curved.
Fig. 38 shows a perspective view of the T-nut of the present invention in which flange portion 5 is provided with a protrusion 21.
Fig. 39 shows a bottom view of the octagonal (or generally octagonal) flange portion 5.
Fig. 40 shows a perspective view of the T-nut of the present invention, provided with a round flange portion 5.
Fig. 41 shows a perspective view of the T-nut of the present invention, provided with a both side arc rectangular flange portion 5.
Figs. 42(a)(b) show T-nut 1 of the thirteenth embodiment of the present invention including a partial cutout.
Fig. 43 shows a perspective view of the T-nut 1 of the present invention as another embodiment.
Fig. 44 shows a perspective view of the T-nut 1 of the present invention as another embodiment.
Fig. 45 shows a perspective view of the T-nut 1 of the present invention as another embodiment.
Fig. 46 shows a bottom view, a front view and a front view including a partial cutout as to the T-nut 1 of the present invention as another embodiment.
Fig. 47 shows a perspective view of a conventional T-nut 1.

### Detailed Description of the Invention

In the T-nut of the present invention, a press process is applied to form the internal convexoconcave groove of the female screw on the inner surface of the tubular shank. The external convexoconcave groove, corresponding to the internal convexoconcave groove, is also formed on the external surface of the tubular shank. Thus, a screw process is not necessarily applied on the inner surface of the tubular shank in order to form the female screw, and bolts and screws can be engaged with the internal convexoconcave groove of the female screw of the tubular shank. However, a screw process can be further applied to adjust the internal convexoconcave groove for serving as a female screw.

Also, regardless of whether the bolts or screws are in compliance with the meter standard or inch standard, the female screw of the present invention can be easily adjusted to any bolts or screws. One example case is where an internal convexoconcave groove of the female screw is formed for an M6 screw in compliance with the meter standard, but where a screw in compliance with the inch standard, having a pitch similar to the M6 screw, is tried to be engaged. In such a case, the inner surface is slightly scraped along the internal convexoconcave groove so as to form a female screw in compliance with the inch standard, so that the screw of the inch standard can be screwed. Thus, a bolt or screw in a different standard can be screwed with the existing internal convexoconcave groove of the tubular shank by applying simplified screw process, with small amount of scrapes. Thus, the material, as well as the load and cost for dealing with the scrapes can be significantly saved.

Also, the convexoconcave grooves are formed both on the external surface and internal surface of the tubular shank, and thus, the T-nut of the present invention is stronger than the conventional T-nuts against the compression force in the axial direction of the shank.

Also, the external convexoconcave groove is formed on the external surface of the tubular shank. When the shank of the T-nut is inserted into a hole of the material, the external convexoconcave groove is spirally engaged with the hole. Thus, the T-nut is avoided from being released from the hole.

The spiral external convexoconcave groove is formed on the external surface of the tubular shank. When the shank is inserted into a hole formed on a comparatively hard material, the shank can be rotated and spirally engaged into the material. Thus, the shank can be easily inserted.

When the flange portion is made thicker than the shank, the claws become stronger such that the claws are avoided from being deformed when they are engaged with the material.

### Best Mode of the Invention

The best mode of the present invention is described hereinafter.

Conventionally, metal plates having a thickness of 1.2mm were used. In the T-nut of the present invention, the thinner metal plate or tube can be used. In one embodiment, a metal plate or tube having a thickness of 0.4mm can be used. In another embodiment, a metal plate or tube having a thickness of 0.2mm to 0.6mm can be used.

The internal convexoconcave groove of the female screw is formed on one surface of the thin metal plate by means of a press process, and an external convexoconcave groove is formed on the other surface of the thin metal plate as corresponding to the internal convexoconcave groove. For the press process, a die and punch can be used for sandwiching the thin metal plate. The die and punch have a convexoconcave screw grooves corresponding to the screw or bolt with a pitch in compliance of the metal or inch standard. The internal convexoconcave groove and the external convexoconcave groove are formed on both surfaces of the thin metal plate.

An internal convexoconcave groove can be formed on the inner surface of the thin metal tube or the cylinder cylindrically formed from the thin metal plate. An external convexoconcave groove can be also formed on the external surface. In such a case, a cylindrical die can be used which has a convexoconcave screw groove formed on the external surface. The die can be inserted into the thin metal tube or the cylinder in which the thin metal plate is cylindrically formed. A punch can be also used which has a convexoconcave screw groove. The punch can be pressed on the outside of the thin metal tube or the cylinder in which the thin metal plate is cylindrically formed. Accordingly, an internal convexoconcave groove can be formed on the inner surface and an external convexoconcave groove can be formed on the external surface.

The internal convexoconcave groove or the external convexoconcave groove can be generally a screw pattern in which a convex portion and concave portion are alternatively formed. Since the internal convexoconcave groove or the external convexoconcave groove is in almost screw pattern, the convex portion (top portion) and concave portion (bottom portion) do not necessarily have accurate triangle shape in the sectional view, but can have an almost triangle shape whose tip portion is generally rounded and the slope portion is generally waved.

When an internal convexoconcave groove is formed on the inner surface of the cylinder of the thin metal plate or thin metal tube, the concave portion of the internal surface corresponds to the convex portion of the external surface. In the same manner, the convex portion of the internal surface corresponds to the concave portion of the external surface.

The internal convexoconcave groove can be formed at all or a part of the inner surface.

When the tubular shank is formed separately from the flange portion, the flange portion is joined to the one end of the tubular shank. The shank can be joined to the flange portion by means of welding, brazing, adhesive, or engaging the one end of the shank with the hole formed at the center of the flange portion. The T-nut of the present invention can be provided with a hole at the center of the flange portion whose diameter is equal or almost equal to the inner diameter of the tubular shank. However, the T-nut of the present invention is not limited to ones having the hole.

Next, the present invention is described based on the drawings of the present invention. The same references are used in the examples for describing the same parts.

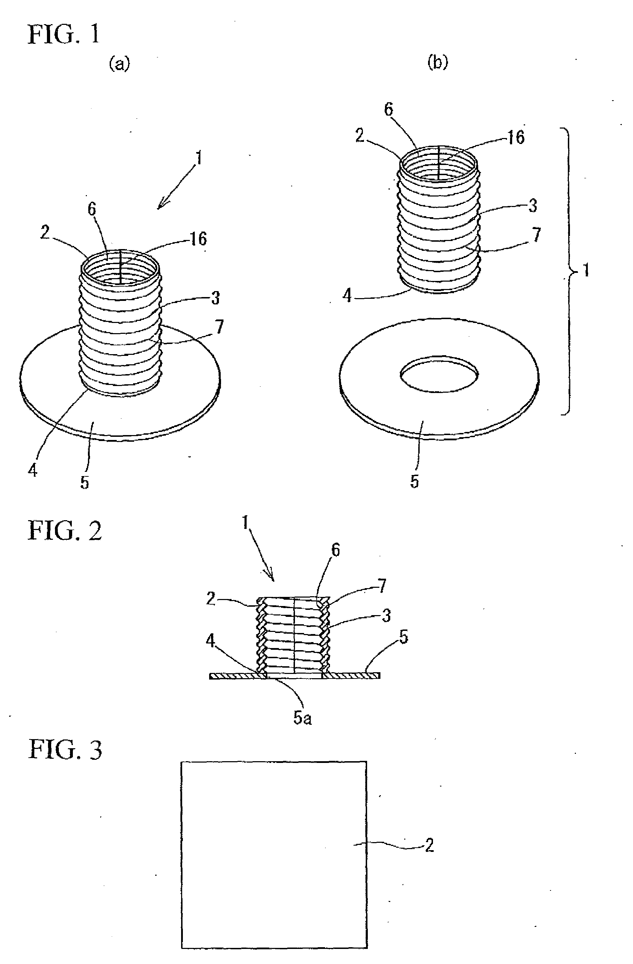

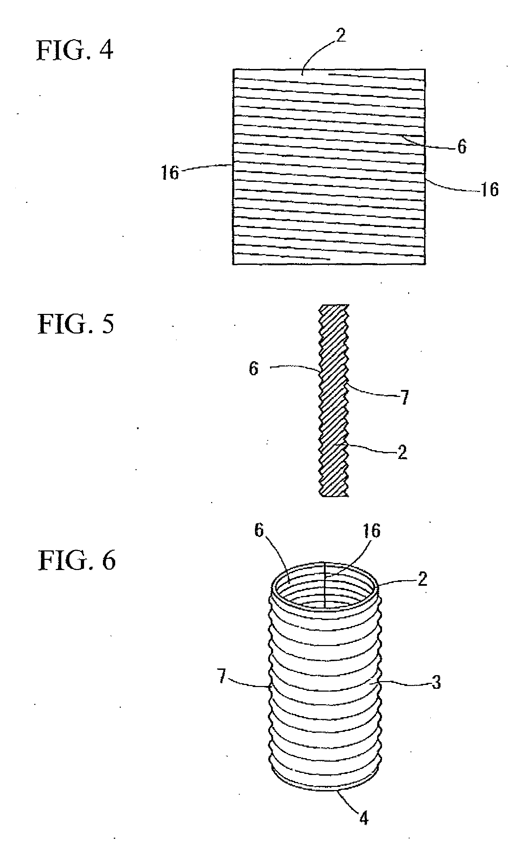

Figs. 1 to 6 show the first embodiment of the T-nut of the present invention. In the T-nut 1 as shown, the tubular shank 3 is a different body from the flange portion 5, which is joined to the tubular shank 3. The shank 3 can be formed by means of a press process applied to one surface of a thin plane metal plate 2 having a square shape. In this embodiment, the press process is applied to the entire surface. The thin plane metal plate 2 can be in the form of a rectangular shape instead of the square shape. The thin plane metal plate 2 has a predetermined thickness (e.g., 0.4mm). On the thin plane metal plate 2, a female screw of the internal convexoconcave groove 6 is formed (see Figs. 4 and 5), and an external convexoconcave groove 7, corresponding to the female screw of the internal convexoconcave groove 6 (see Fig. 5), is formed. The internal convexoconcave groove 6 is disposed inside such that the metal plate 2 is rolled cylindrically and opposed ends 16 (see Fig. 6.) are joined together to be formed into a cylinder.

Further, the flange portion 5 is joined to one end 4 of the cylindrical shank 3 (see Figs. 1 to 3.). The flange portion 5 has a hole 5a whose diameter is equal to or almost equal to the inner diameter of the shank 3 at the center of the flange portion. The flange portion 5 has a thickness equal to that of the tubular shank 3, so as to form the T-nut as shown in Fig. 1.

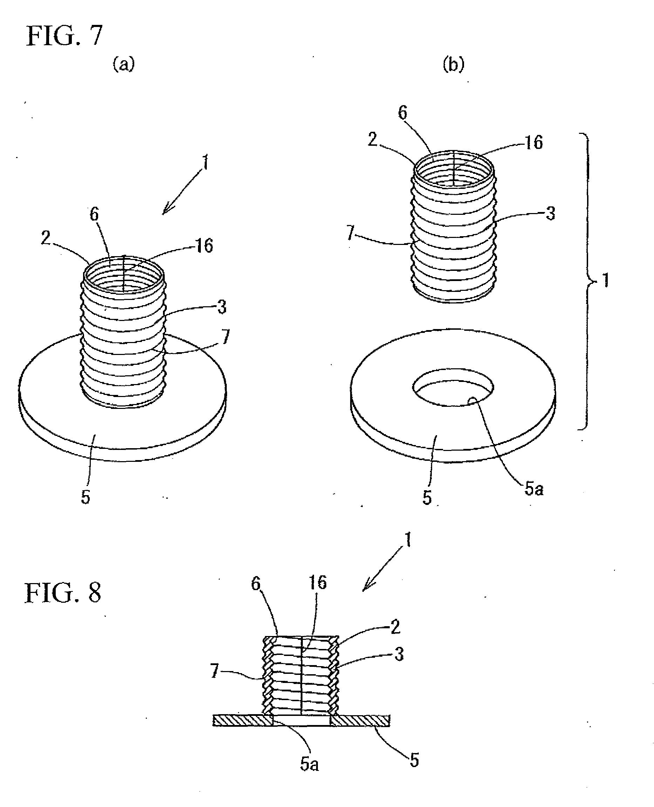

Figs. 7 and 8 show a T-nut as the second embodiment of the present invention. The flange portion of the T-nut has a thickness larger than that of the tubular shank, instead of using the flange portion of the T-nut having a thickness equal to the tubular shank 3. The structures of the other parts are the same as the first embodiment. The same reference numbers are used as the first embodiment and detailed explanation is omitted here.

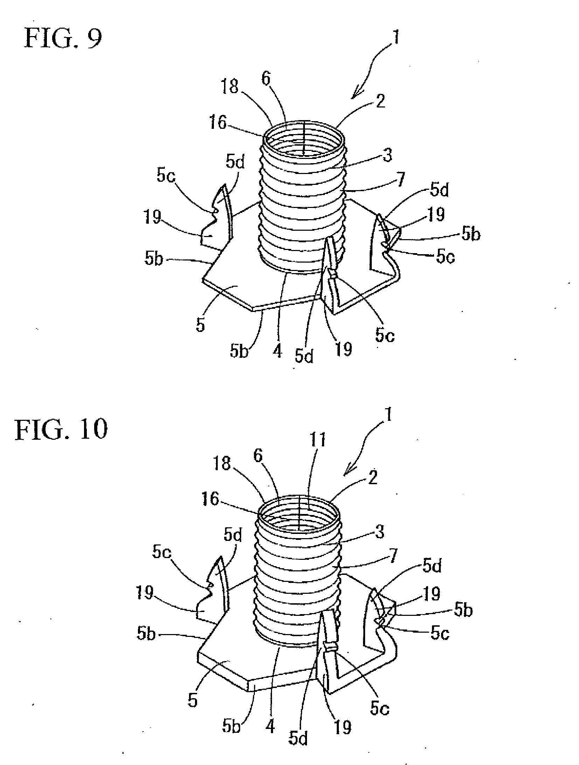

Fig. 9 shows a T-nut as the third embodiment. In the T-nut 1 as shown, a flat flange portion 5 is joined to one end 4 of the cylindrical shank 3 as prepared in the same manner as the first embodiment. The flat flange portion has a thickness same as the tubular shank 3, and four claws 19 are extended in the direction from one end 4 of the shank 3 to the tip portion 18. In the flange portion 5 of the embodiment, cuts 5b are formed near the four corners of the rectangular thin metal plate, and the cuts 5b are bent in the direction toward the tip portion 18 of the shank 3 by the angle of 90°, such that the four claws 19 are formed to be extended in the direction of the tip portion 18. Also, each of the claws 19 has notches 5c at a part of the external side. The structures of the other parts are the same as the first embodiment. The same reference numbers are used as the first embodiment and detailed explanation is omitted here.

Fig. 10 shows a T-nut 1 as the fourth embodiment of the present invention. In the T-nut 1, the flange portion 5 and claws 19 have a thickness larger than those of the tubular shank 3. The structures of the other parts are the same as the first embodiment. The same reference numbers are used as the first embodiment and detailed explanation is omitted here.

In each of the T-nuts 1, by getting the thickness of the flange portion 5 thicker than the cylindrical shank 3, the strength of the flange portion 5 and the claws 19 is improved. Therefore, when the shank 3 of the T-nut is inserted into a hole of the material, the claws 19 can be strongly engaged or bitten with the material. Thus, it can show enough resistance against the rotation power applied when bolts, etc. are screwed with the shank 3.

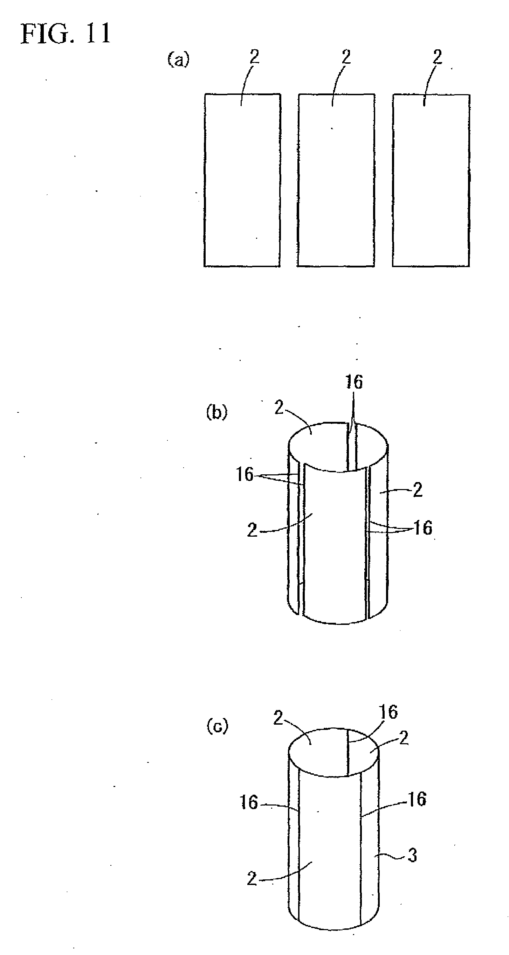

In the T-nut 1 of the first to fourth embodiments, the shank 3 can be formed from several sheets of metal plate parts as shown in Figs. 11(a)(b)(c). Each metal plate part can be rolled into an arc shape, and the opposing ends 16 can be joined together to form a cylindrical shape. The internal convexoconcave groove 6 and the external convexoconcave groove 7 are formed thereon, while Figs. 11(a)(b)(c) omit those grooves.

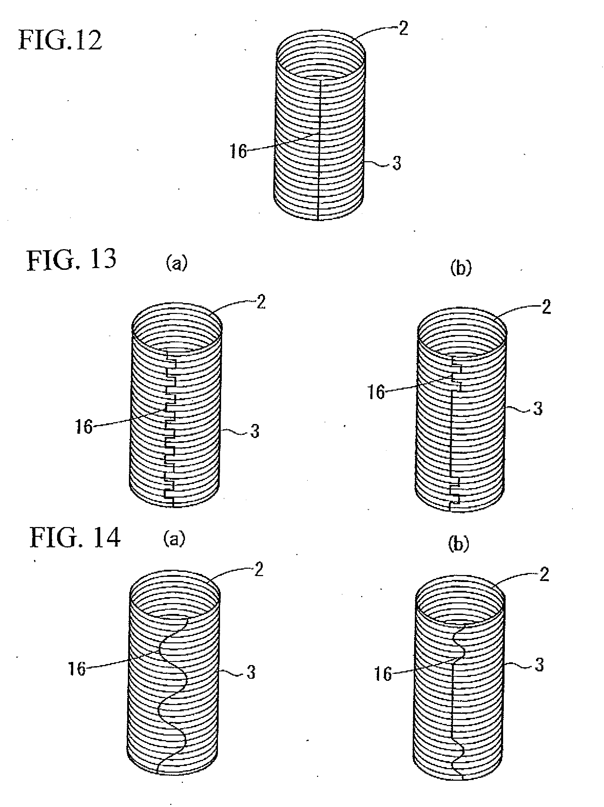

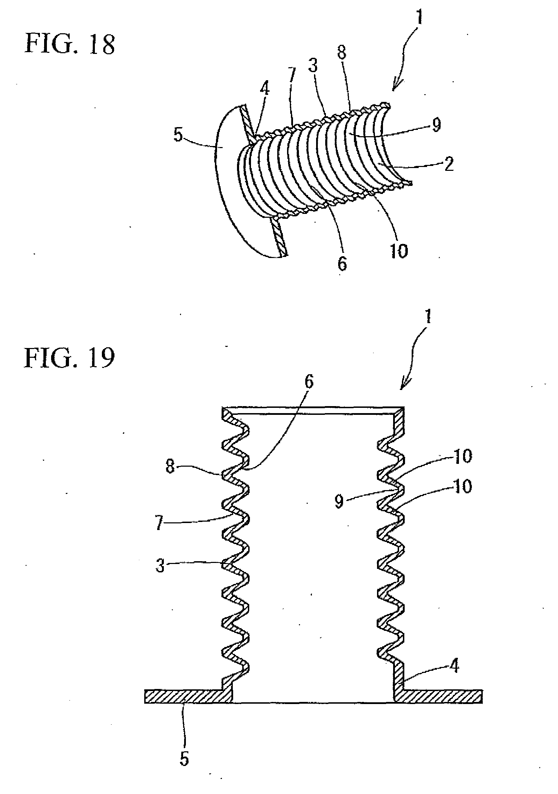

Several sheets of the metal plate 2 has opposing ends 16. The opposing ends 16 can be linear as shown in Fig. 12, but can be in the form of continuously convexo-concave shape as shown in Fig. 13(a), in the form of discontinuously convexo-concave shape as shown in Fig. 13(b), in the form of continuously waved shape as shown in Fig. 18(a), or in the form of discontinuously convexo-concave shape as shown in Fig. 18(b).

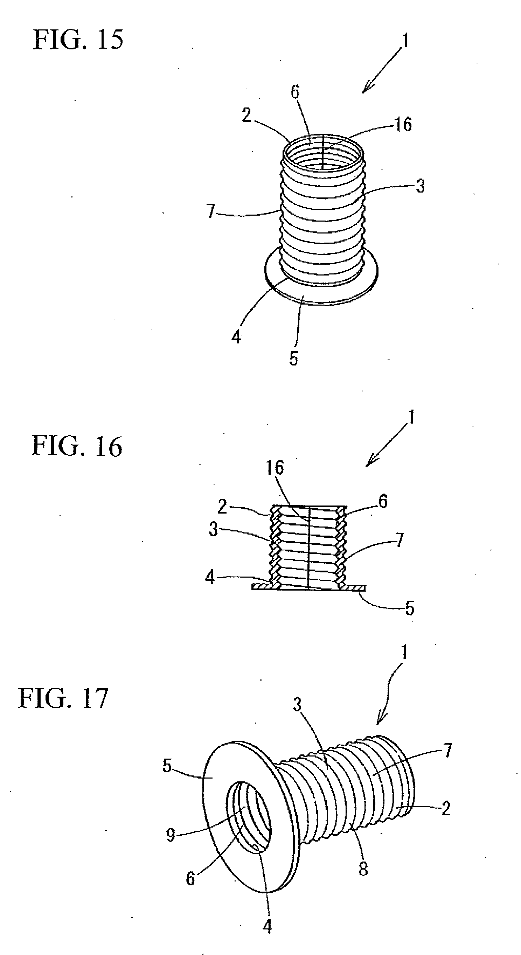

Figs. 15 and 16 show a T-nut 1 as the fifth embodiment. The T-nut 1 as shown here is formed in the same manner as the T-nut 1 of the first embodiment. A press process is applied to one surface of a thin and flat metal plate having a square shape. The press process is applied to the entire surface in this embodiment. The square shape can be replaced with a rectangular shape. A female screw 6 of the internal convexoconcave groove is formed on the one surface, and an external convexoconcave groove 7, corresponding to the female screw 6 of the internal convexoconcave groove, is formed on the other surface. The external convexoconcave groove 7 is formed on the entire surface thereof. Further, the metal plate 2 is rolled such that the internal convexoconcave groove 6 is located inside to form a shank 3. The flange portion 5 is integrally formed with one end of the shank 3 such that it is extended outward. The opposing ends 16 are joined together.

Figs. 17 to 19 show a T-nut as the sixth embodiment of the present invention. The T-nut 1 as shown comprises a tubular shank 3 formed by means of a reduction process applied to a thin metal plate 2 having a thickness of e.g., 0.4mm, and a flange portion 5 integrally formed with the shank 3. The flange portion 5 extends outward from one end 4 of thereof.

In the forming by means of a reduction process, the rectangular metal plate 2 is intermittently sent in a longitudinal direction in order to apply the reduction process. First, below the metal plate 2, a forming die is disposed, and above it, a clamp die is disposed. The lower forming die and the upper clamp die synchronously get near to or step away from the metal plate 2. At the side of the lower forming die, a knockout is disposed, and at the side of the upper clamp die, a punch is disposed.

In order to determine the position to become the flange portion 5, the periphery of the metal plate 2 is cut. Since the portion to become the flange portion 5 is not entirely cut off during the process, the cut portions are formed not on the entire of the periphery but on the part of the periphery. The remaining portion where the cut portion is not formed can be a deformable joint portion.

Then, the center of the portion to become the flange portion 5 is protruded below the main surface of the metal plate 2. The metal plate 2 is subjected to a reduction process to form a protruding portion which becomes the tubular shank 3. A through hole is formed on the tip portion of the protruding portion by means of a punch. Then, the portion to become the flange portion 5 is separated from the metal plate 2. These intermediate products are subjected to a barrel grinding process to remove burrs generated during the process.

Further, on the tubular shank 3, a press process is applied to form a female screw of the internal convexoconcave groove 6, as explained before, to engage the inner surface with a bolt or screw. Also, an external convexoconcave groove 7, corresponding to the internal convexoconcave groove 6, is formed on the external surface. The internal convexoconcave groove 6 and the external convexoconcave groove 7 are formed such that the wall of the shank 3 has a continuous spiral convexoconcave. The wall 8 of the shank 3 has a thickness equal to that of the flange portion 5.

In the T-nut 1, when a bolt (not in the drawing) is screwed with the female screw of the internal convexoconcave groove 6, the screw pattern of the bolt or screw is screwed with the concave groove 9 of the internal convexoconcave groove 6 such that the screw pattern of the bolt or screw scrapes the convex portion 10 between both sides of the concave portions 9 (see Fig. 19.), so as to make screw engagement of the bolt or screw with the internal convexoconcave groove 6.

When the shank 3 is inserted into the hole, the external convexoconcave groove 7 of the shank 3 is engaged with the hole of a material to be fixed (not shown in the drawing). Thus, the T-nut 1 can show resistance against the releasing direction or rotating direction. Accordingly, the T-nut is prevented from rotating when a bolt, etc. is screwed with the shank 3.

The inner surface of the cylindrically formed shank 3 has formed a female screw of the internal convexoconcave groove 6 by means of a press process. Thus, the cylindrically formed shank 3 is not necessarily applied to a screw process to form a female screw. Thus, the shank 3 can be formed from a thinner metal plate 2 than conventional ones, resulting in cost reduction.

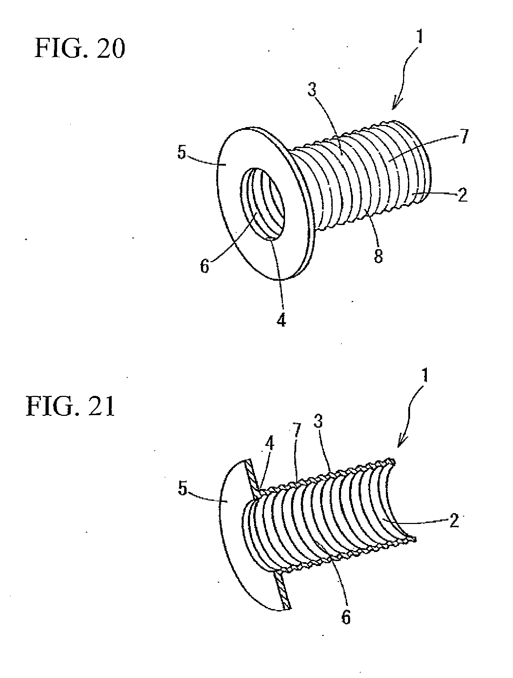

Figs. 20 and 21 show a T-nut as the seventh embodiment. The T-nut as shown is formed by applying a thin metal plate 2 having a predetermined thickness (e.g., 0.4mm) to a reduction process. The shank 3 is integrally formed with the flange portion 5. The shank 3 is cylindrically formed from a thin metal plate 2 by means of a reduction process as explained above. The flange portion 5 is extended outward from one end 4 of the shank 3. Further, a press process is applied to form a female screw of the internal convexoconcave groove 6 on the entire inner surface of the shank 3, and an external convexoconcave groove 7 on the external surface of the shank 3. The external convexoconcave groove 7 corresponds to the female screw of the internal convexoconcave groove 6.

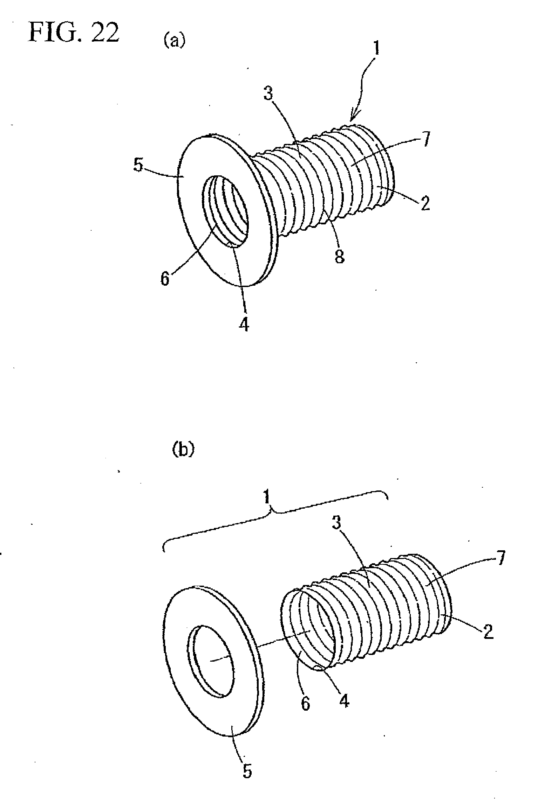

Fig. 22 shows a T-nut as the eighth embodiment of the present invention. The T-nut as shown here comprises a tubular shank 3, and a flange portion 5 having a thickness equal to that of the shank 3, separately formed from the shank 3. The flange portion 5 is joined to one end 4 of the shank 3. In the similar manner as explained above, the tubular shank 3 is cylindrically formed by applying a thin metal plate 2 to a reduction process to form a female screw of the internal convexoconcave groove 6 on the entire inner surface and an external convexoconcave groove 7 to form on the external surface of the shank 3. The external convexoconcave groove 7 corresponds to the female screw of the internal convexoconcave groove 6.

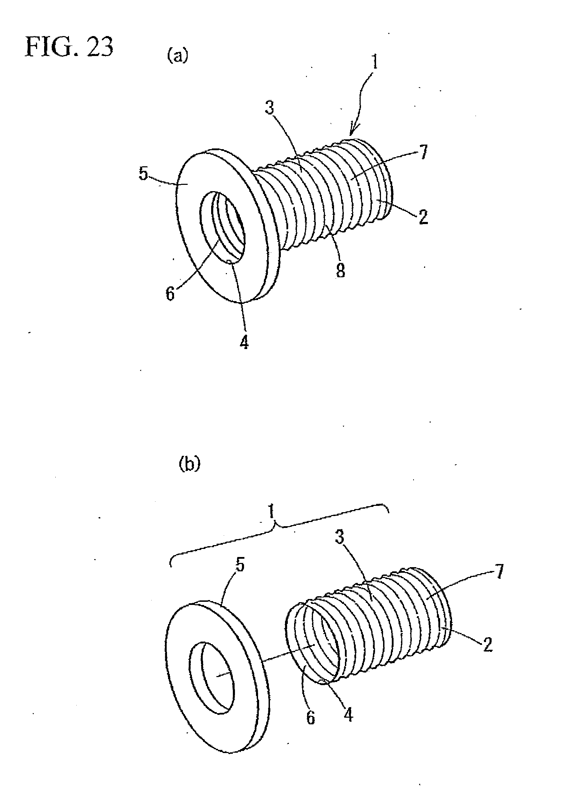

Fig. 23 shows a T-nut as the ninth embodiment. The T-nut as shown here is different from the eight embodiment in view of the thickness of the flange portion 5, but other structures are the same as the eighth embodiment. The flange portion 5 of this embodiment is formed from a metal plate thicker than that of the tubular shank 3.

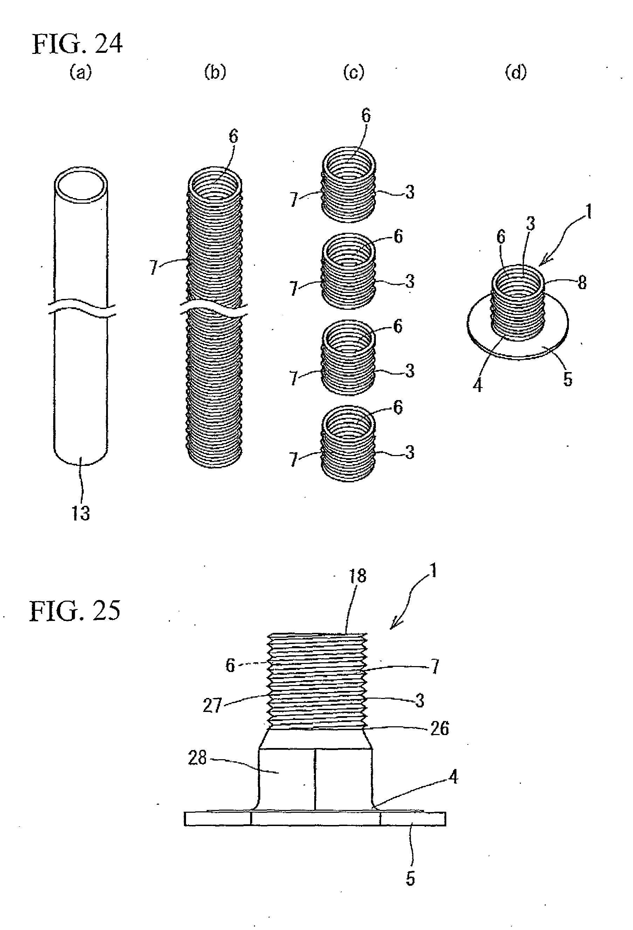

Fig. 24 shows a T-nut as the tenth embodiment of the present invention. The T-nut 1 as shown here is formed from a metal tube 13 (see fig. 24(a)) made of a steal tube having a thickness thinner than the wall 8 of the tubular shank 3. Thus, the shank 3 of the T-nut 1 is formed by applying the metal tube 13 to the press process as explained before. Although the drawing shows a elongated tube, a tube having a length for single piece of T-nut can be used. A female screw of the internal convexoconcave groove 6 is formed on the inner surface (see Fig. 24(b)) for engaging it with a bolt or screw. An external convexoconcave groove 7 is formed on the external surface corresponding to the internal convexoconcave groove 6. Then, it is cut to be a predetermined length (Fig. 24(c)). Also, the flange portion 5 is separately formed from the shank 5, and one end 4 of the shank 3 is joined to it.

In the T-nut 1 of the tenth embodiment, the shank is not formed from a metal plate by means of a reduction process. In this embodiment, a metal tube 13 is used which is cut by a predetermined length to form a shank, thereby simplifying the process resulting in cost reduction. Other processes are the same as the T-nut of the first embodiment, so the detailed explanation is omitted. Also, in the T-nut 1 of the tenth embodiment, the flange portion 5 has a thickness equal to the wall of the shank 3. Alternatively, the flange portion 5 has a thickness thicker than that of the wall of the shank 3. Also, in the T-nut 1, while being omitted to shown in the drawing, the flange portion 5 can be provided with claws and/or protrusions as shown in other embodiments, and the tip portion of the shank 3 can be provided with a to-be-caulked portion, that is, a thinner portion to be caulked.

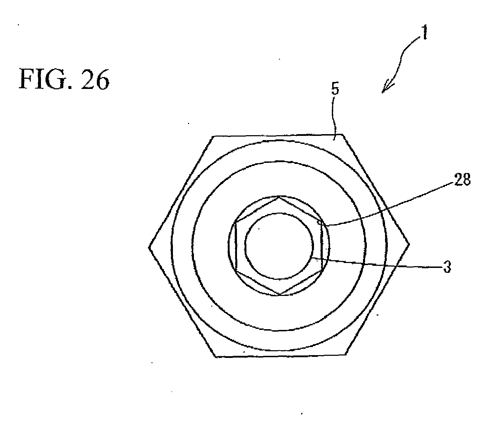

Figs. 25 and 26 show a T-nut as the eleventh embodiment of the present invention. In the T-nut as shown, the shank 3 has a step portion 26 provided at the midway in the axial direction, a cylinder portion 27 extending between the tip portion 18 and the step portion 26, and a base side enlarged cylinder portion 28 where the inner diameter and the outer diameter are larger than those of the cylinder portion 27, extending between the step portion 26 and the flange portion 5. The cylinder portion 27 has a female screw of the internal convexoconcave groove 6 on the inner surface, and an external convexoconcave groove 7 on the outer surface of the cylinder portion 27. The external convexoconcave groove 7 corresponds to the female screw of the internal convexoconcave groove 6. The flange portion 5 is integrally formed with or separately formed from the shank 3. When being separately formed, it is joined to the base side enlarged cylinder portion 28 of the shank 3. The inside of the enlarged base side cylinder portion 28 is hollow and hexagonal so as to be engaged with a tool such as a hexagonal wrench. The tubular shank 3 is made of a metal plate having a thin thickness applied to a reduction process, or a metal tube having a thin thickness applied to a press process, so as to form the one as shown in the drawing. In stead of the hexagonal shape, the base side enlarged cylinder portion 28 can be formed into other shapes such as a rectangular shape.

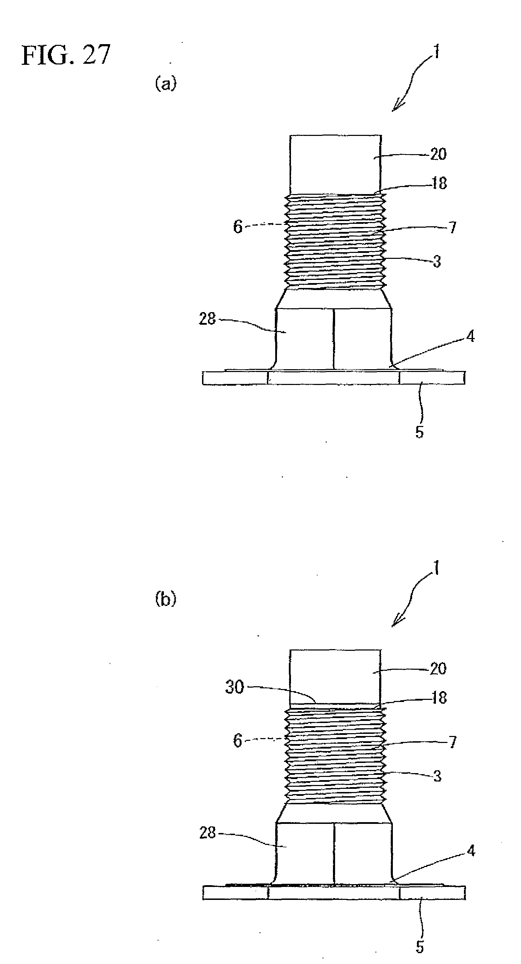

Fig. 27 shows a T-nut as the twelfth embodiment of the present invention. The T-nut 1 as shown is provided with a to-be-caulked portion 20 where it is comparatively thinner to be caulked. The difference from the T-nut of the eleventh embodiment is that the to-be-caulked portion 20 is formed by an extended length from the tip portion 18 where the female screw of the internal convexoconcave groove 6 is not formed. Also, except for the cylindrical inner surface of the to-be-caulked portion 20, the internal convexoconcave groove 6 is formed after the to-be-caulked portion 20 is formed, so as to form an external convexoconcave groove 7 on the external surface (Fig. 27(a)). A line 30 is formed on the border portion between the tip portion 18 and the to-be-caulked portion 20 (Fig. 27(b)). The other structures are the same as the T-nut of the eleventh embodiment.

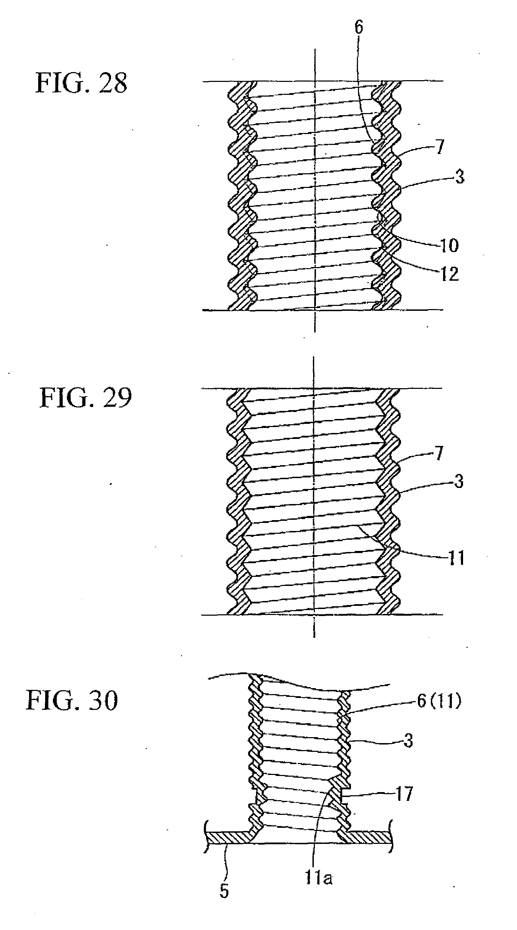

In the T-nut 1 of the present invention, a female screw 11 can be formed by further applying it to a screw process along the internal convexoconcave groove 6 of the female screw as shown in Figs. 28 and 29. A screw (or bolt) can be an ISO meter screw, ISO inch screw or a unified screw. A screw in compliance with a different standard has a different pitch, that is, a distance between the mountains. The T-nut 1 of the present invention can be used for any standards. If necessary, the female screw is subjected to a screw process, and the portion such as the convex portion 10 is slightly scraped, so as to engage it with a screw or bolt.

In this case, when a screw process is applied, the shank 3 has already formed the female screw of the internal convexoconcave groove 6, so that the convex portion 10 or concave portion 12 can be slightly scraped. Thus, the process is easily done. Compared with the case where any internal convexoconcave groove 6 is not formed on the tubular shank, the scrape becomes remarkably little, resulting in saving the labor and cost for dealing with the scrape.

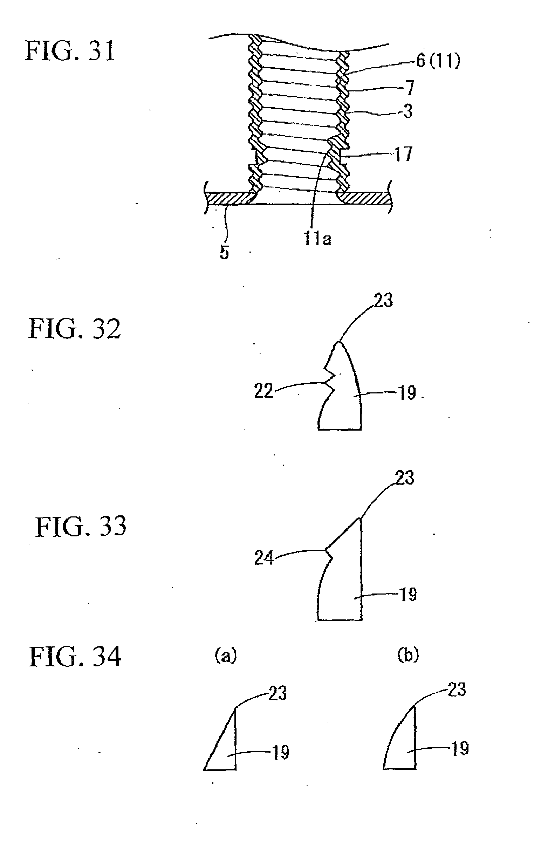

The shank 3, as shown in Fig. 30, is integrally formed with the flange portion 5, and the shank, as shown in Fig. 31, is a different body from the flange portion 5. These shanks have an irregular portion on the female screw of the internal convexoconcave groove 6. The irregular portion is made by applying an external force to the external surface of the female screw, so as to form at least one concave portion 17. The concave portion 17 is formed by inwardly deforming a part of the external surface where the female screw is formed. The concave portion 17 can be formed on the external convexoconcave groove 7. By forming the concave portion 17, the female screw or the screw pattern is partially made irregular. Thus, when the female screw is engaged with a screw or bolt, the screw or bolt needs to be rotated at a comparatively strong force to pass the irregular portion. At that time, the screw pattern of the irregular portion is deformed, and the screw or the bolt is engaged with the female screw, thereby preventing the bolt or screw from being released.

Also, in the T-nut 1 of the present invention, claws 19 are formed on the periphery portion of the flange portion 5 such that they are directed from one end 4 of the shank 3 to the tip portion 18, as shown in Fig. 32. The shape of the claws 1 is in the form of a saw-like notches in which the top portion 23 is sharply-peaked, and a part of the periphery has notches 22, as shown in Fig. 32. Alternatively, the shape of the claws 1 is in the form of a hook shape 24 in which the top portion 23 is sharply-peaked and a part of the periphery has a hook portion in order to be hooked. Alternatively, as shown in Figs. 34(a)(b), the shape of the claws 1 is in the form of a linear, straight or curved shape in which the top portion 23 is sharply-peaked and the periphery is linear, straight or curved. Of course, the claws can be in the other shapes, and the shape is not limited into specific one.

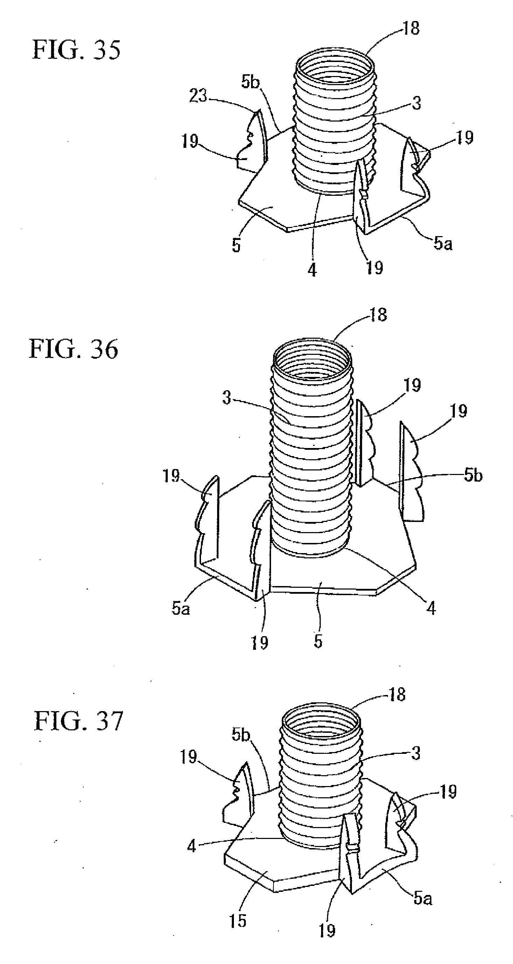

Also, the claws 19, as shown in Figs. 35 and 36, are formed such that two couples of them are formed on the flange portion 5, directed from one end 4 of the shank 3 to the tip portion 18. One of the claws 19 is not shown in Fig. 35 for convenience.

The two couples of the claws 19, as shown in Fig. 35, are opposed with respect to the radial direction of the flange portion 5. Also, as shown in Fig. 36, adjacent claws 19 are formed parallel or almost parallel. While the peripheral portion 5a, 5b between claws 19, as shown in Fig. 35, are linear, the peripheral portion 5a, 5b between claws 19 can be curved as shown in Fig. 37.

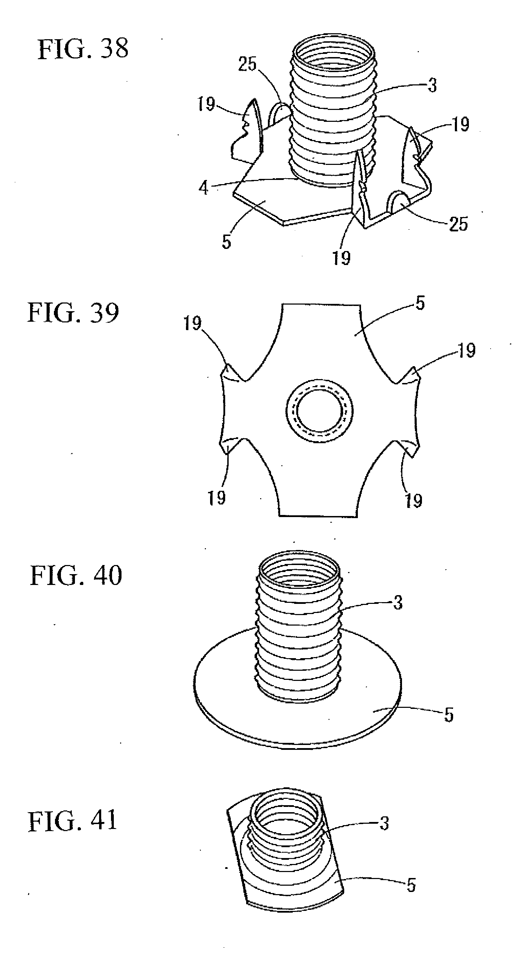

Also, the T-nut 1 of the present invention has a protrusion 25 directed from one end 4 to the tip portion 18b of the shank 3. The protrusion 25 is formed at the periphery between the adjacent claws on the flange portion 5 as shown in Fig. 38.

The flange portion 5 of the T-nut 1 can have an octagonal shape (or generally octagonal shape) as shown in Fig. 39, a round shape as shown in Fig 40, or a both-side-arc-rectangular shape as shown in Fig. 41, or other shapes.

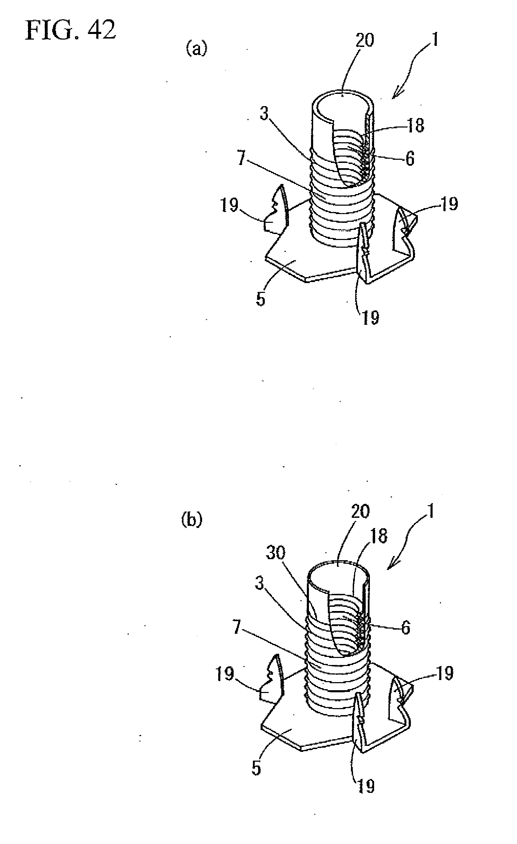

Fig. 42 shows a T-nut as the thirteenth embodiment of the present invention. The T-nut as shown here comprises a flange portion 5 with claws 19, a to-be-caulked portion 20, and a shank 3. Except for the cylindrical inner surface of the to-be-caulked portion 20, an internal convexoconcave groove 6 is formed. On the external surface, an external convexoconcave groove 7 is formed (Fig. 42(a)). In the T-nut 1 of the embodiment, a line is formed at the border between the tip portion 18 and the to-be-caulked portion 20 (Fig. 42(a)). The formation of the claws 19 and to-be-caulked portion 20, etc. are disclosed in Japanese patent Application No. 5-268820, which was filed by the same applicant as the present invention, and the other structures are the same as the previous discussion, so the explanation is omitted here. In the T-nut 1 of the thirteenth embodiment, the shank 3 is subjected to a reduction process of a thin metal plate, processed into a cylindrical form, or formed by a metal tube. Also, the flange portion has a thickness equal to or thicker than that of the shank, and is integrally formed with the shank or separately formed from the shank.

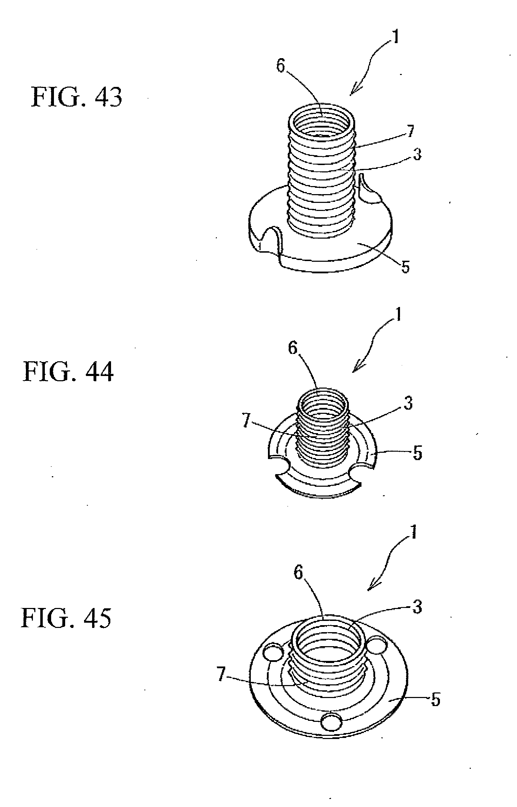

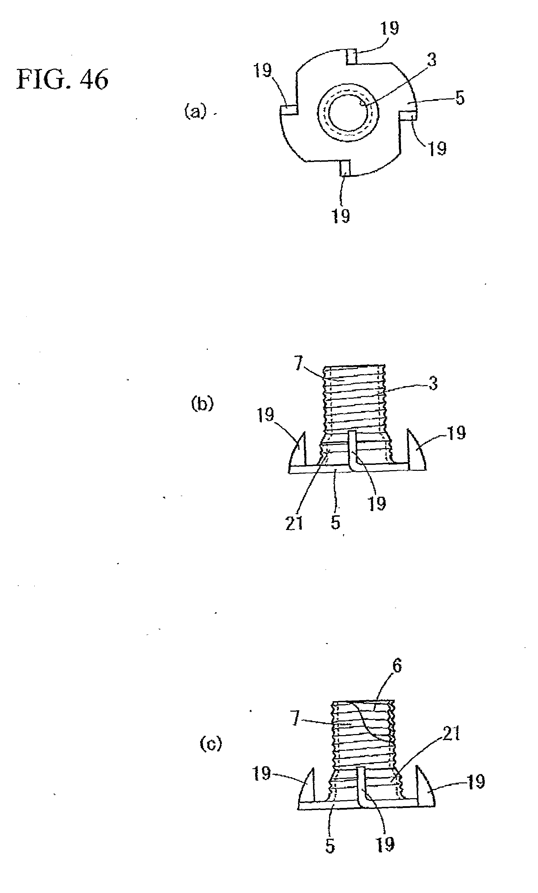

In Figs. 43 to 46, T-nuts 1 of other embodiments which have other shape of the shank 3 and flange portion 5, etc. are shown with the same numbers as referenced above. The reference numbers used in the drawings are summarized: 1: T-nut; 2: metal plate; 3: shank; 4: one end; 5: flange portion; 6: internal convexoconcave groove; 7: external convexoconcave groove; 13: metal tube; 16: side end; 19: claw; 20: to-be-caulked portion (a thinner portion to be caulked); and 25: protrusion.

## Claims

1. A T-nut, comprising:
a tubular shank having a cylindrical shape, having a first end and a second end, an inside surface and an outside surface, the tubular shank being made of a thin metal plate pressed to form a female screw on the inside surface, the outside surface having a pattern corresponding to the female screw; and
a flange portion formed to the first end of the tubular shank.

2. A T-nut according to claim 1, wherein the flange portion is joined to the tubular shank.

3. A T-nut according to claim 1, wherein the tubular shank is integrally formed with the flange portion.

4. A T-nut according to claim 1, wherein the female screw of the T-nut is capable to be adjusted to engage a screw or bolt whose standard is different from the female screw.

5. A method for preparing a T-nut, comprising:
providing a thin metal plate having a first surface and a second surface;
applying press processing to the first surface to form an internal convexoconcave groove, the second surface forming an external convexoconcave groove;
rolling the thin metal plate to form a cylindrical shank having a first end and a second end, the internal convexoconcave groove serving as a female screw; and
forming a flange portion on the first end.

6. A method for preparing a T-nut, comprising:
providing a thin metal tube having a first end and a second end, the thin metal tube having an internal surface and an outside surface;
applying press processing to the internal surface to form an internal convexoconcave groove, the second surface forming an external convexoconcave groove, the internal convexoconcave groove serving as a female screw; and
forming a flange portion on the first end.
